# EUROPEAN PATENT APPLICATION

(11) **EP 1 739 860 A1**
(43) Date of publication of application: **03.01.2007**
(21) Application number: 05774484.9
(22) Date of filing: 10.08.2005
(51) Int. Cl.: H04B 7/26

(54) **METHOD FOR ESTABLISHING LOAD-BEARING IN MULTIMEDIA BROADCAST/MULTICAST SERVICE**

(30) Priority: 10.08.2004 CN 200410070077
(71) Applicant: Huawei Technologies Co., Ltd., Longgang District, Shenzhen Guangdong 518129 (CN)
(72) Inventor: ZHANG, Hai, Huawei Admin. Building, Shenzhen, G uangdong 518129 (CN); ZHANG, Jianchun, Huawei Admin. Building, Bantian, Shenzhen,Guangdong 518129 (CN); LUO, Long, Huawei Admin. Building, Bantian, Shenzhen, Guangdong 518129 (CN); ZHANG, Wenlin, Huawei Admin. Building, Bantian, Shenzhen, Guangdong 518129 (CN)
(74) Representative: Thun, Clemens
(86) International application number: PCT/CN2005/001233
(87) International publication number: WO 2006/015544

(57) **Abstract**

The present invention discloses a method for creating a bearer in Multimedia Broadcast/Multicast service (MBMS), including the activating process and the deactivating process of an MBMS service, wherein an extended MBMS Network Service Access Point Identity (MBMS_NSAPI) is adopted such that a user can activate more than eleven MBMS bearer services simultaneously, and avoid the complexity of manual activation. In this method, an extended TI can be adopted as well to identify more than 16 bidirectional message flows. This invention provides another method for creating a bearer in MBMS, wherein an extended MBMS_NSAPI is used in the activating process and the deactivating process of an MBMS service while the MBMS_NSAPI and TI are replaced by a special MBMS context identity such that not only a user can activate more than eleven MBMS bearer services simultaneously, but also more bidirectional message flows can be identified simultaneously.

## Description

### Field of the Technology

The present invention relates to the field of Multimedia Broadcast/Multicast Service (MBMS) technology, and particularly, to a method for creating bearer in Multimedia Broadcast/Multicast Service.

### Background of the Invention

With the development of the third generation (3G) mobile communication technology, 3G mobile communication provides services with higher data rate than the second generation mobile communication and thus supports multiple types of services, such as video telephone, graphic download, high-speed internet surfing, etc. One type of the services feature transferring data to all its subscribers in a wireless network simultaneously, e.g., weather forecast, news clips, collection of sports game, etc. The concept of broadcast/multicast is thus introduced into the 3G mobile communication.

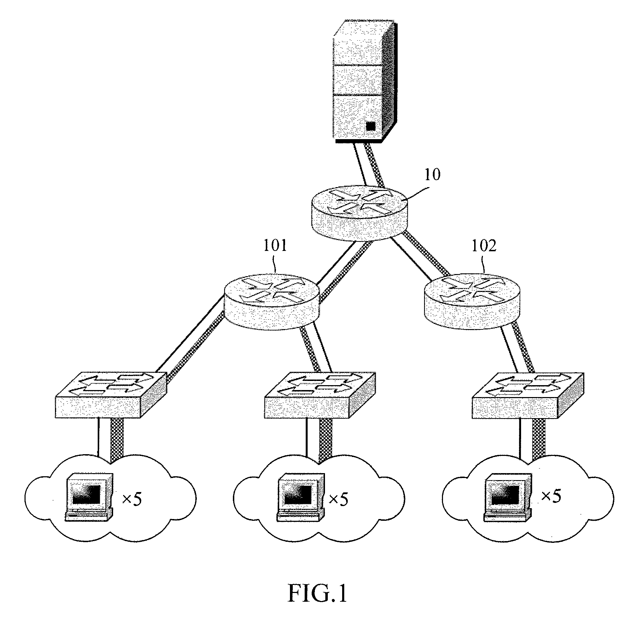

Referring to FIG 1, for an intermediate node such as node 10, the upstream node of node 10 sends only one set of data to node 10 no matter how many downstream nodes of node 10 are expecting to receive data; after receiving the data, node 10 replicates them based on the number of its downstream nodes which are expecting to receive the data, and sends a set of the data to each of these downstream nodes, for example, node 101 and 102 are the downstream nodes of node 10 and are expecting to receive the data, therefore node 10 reproduces two sets of the received data. In this way, every branch of the data transmission tree of broadcast/multicast service transmits only one set of data and occupies only one share of transmission resources, so does the data transmission between the root node and its corresponding downstream nodes. The difference between multicast service and broadcast service is that multicast service provider sends corresponding information only to the subscribers of the information while broadcast service provider sends information to all the users in the wireless network. It can be concluded from the above description that through sending the same information to many users simultaneously, broadcast/multicast service can largely save network resources.

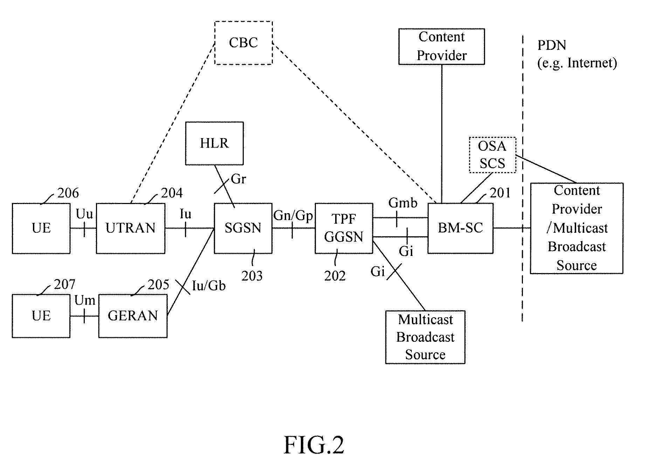

FIG 2 is a schematic diagram illustrating the structure of a wireless network which supports broadcast/multicast services. It is shown in FIG 2 that in the 3G Partner Project (3GPP) of the prior art, the supporting unit of broadcast/multicast service in a wireless network is the Broadcast/Multicast Service Center (BM-SC) 201, which is connected to the Traffic Plane Function (TPF) Gateway GPRS Support Node (GGSN) 202 through Gmb interface or Gi interface. A BM-SC 201 may be connected to a number of the TPF GGSNs 202, each of which is connected to one or several Serving GPRS Support Nodes (SGSN) 203 through Gn/Gp interface. The SGSN 203 is connected to the Universal Mobile Telecommunications System (UMTS) Terrestrial Radio Access Network (UTRAN) 204 through Iu interface. The UTRAN 204 is connected to the User Equipment (UE) 206 through Uu interface. The SGSN 203 may also be connected to the GSM/EDGE Radio Access Network (GERAN) 205 of the Global System for Mobile communications (GSM) through Iu/Gb interface, and then GERAN 205 is connected to the UE 207 through Um interface. Among the above nodes, the GGSNs and the SGSNs are in the Core Network (CN) of the wireless network.

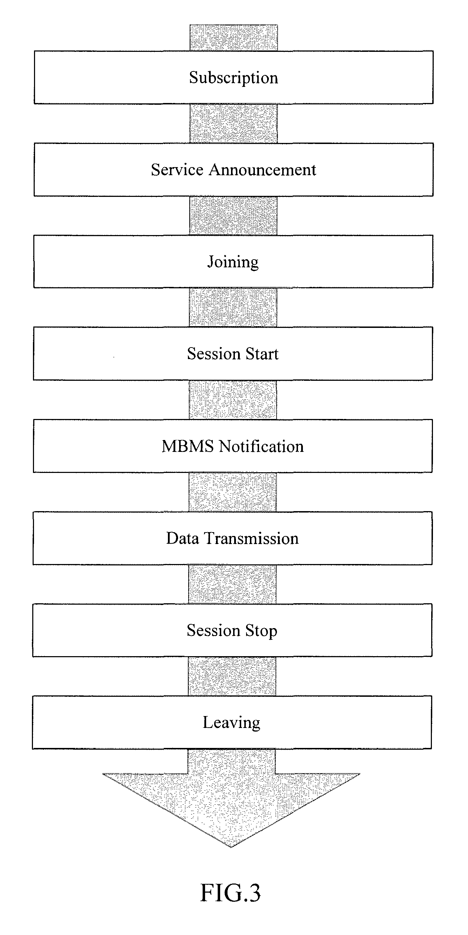

As shown in FIG 3, the processing involved in a MBMS multicast service includes: Subscription, Service Announcement, Joining, Session Start, MBMS Notification, Data Transmission, Session Stop and Leaving. The Subscription process is used for a user to subscribe to the desired MBMS service in advance; Service announcement process is used for BM-SC to announce which service can be provided currently; Joining process is the activating process of MBMS multicast service, in which UE informs the network that it will join the current multicast group, and receive the multicast data of the corresponding service. This Joining process will create in the network and the UE that has joined this multicast group an MBMS UE context recording UE information; in Session Start process, BM-SC prepares the data transmission, and instructs the network to establish bearer resources of the corresponding core network and access network; MBMS Notification process is used to inform UE that an MBMS multicast session will start; in Data Transfer process, BM-SC transmits data to UE through the bearer resources created in Session Start process; Session Stop process is used to release the created bearer resources in Session Start process; Leaving process lets a user within the group leave this multicast group, namely, the user will no longer receive the multicast data, this process will delete the corresponding MBMS UE context.

The activating process of an MBMS multicast service creates an MBMS UE context in UE, SGSN, GGSN and Base Station Controller (BSC)/Radio Network Controller (RNC) for each user that has activated an MBMS multicast bearer service. The MBMS UE context includes the specific information of a specific MBMS bearer that the UE has joined. When a UE joins an MBMS bearer, an MBMS UE context is created in the UE, SGSN and GGSN, and the created MBMS UE context is saved as a portion of UE Mobility Management (MM) context in the UE and SGSN, and saved in GGSN separately. Each MBMS bearer that UE has joined has an MBMS UE context.

As shown in Table 1, an MBMS UE context includes: IP multicast address, Access Point Name (APN), Temporary Mobile Group Identity (TMGI), Linked Network Service Access Point Identifier (NSAPI) and IP Multimedia Sub-system Identifier (IMSI). The IP multicast address is used for identifying an MBMS bearer that the UE has joined; APN is the defined access point name of this IP multicast address; TMGI is the temporary mobile group identity that is assigned to MBMS bearer; Linked NSAPI is the NSAPI from UE to the PDP (Packet Data Protocol) context bearing the IGMP(Internet Group Management Protocol)/MLD(Multicast Listener Discovery) signaling; Transaction Identity (TI) is transaction identity; MBMS NSAPI is used for identifying an MBMS UE context.

**Table 1**

| Parameters | Definitions | UE | SGSN | GGSN | RNC | BSC | BM-SC |
|---|---|---|---|---|---|---|---|
| IP multicast address | IP multicast address identifies an MBMS bearer that UE has joined | X | X | X | X | Iu-X Gb- to be determined | X |
| APN | Defined access point name of this IP multicast address | X | X | X | X | Iu - X Gb-to be determined | X |
| TMGI | Temporary mobile group identity that is assigned to the MBMS bearer | X | | | | | |
| Linked NSAPI | NSAPI from UE to the PDP context bearing the IGMP/MLD signaling | X | X | | | | |
| IMSI | IMSI identifies the user | (1) | (1) | X | (2) | To be determined | X |
| TI | Transaction Identity | X | X | | | | |
| MBMS_NS API | Network layer service access point, identifying an MBMS UE context | X | X | X | | | |

In Table 1, (1) means that in UE and SGSN, IMSI is valid in MM context, MM context includes MBMS UE context; (2) means that in RNC, IMSI is valid in UE context, UE context includes MBMS UE context.

In Table 1, MBMS Network Service Access Point Identity (MBMS_NSAPI) is the NSAPI used for MBMS. Typically, NSAPI and IMSI are used for the routing function of network layer, and a pair of NSAPI/IMSI is used for allocating a Tunnel End Identity (TEID). In UE, NSAPI identifies a PDP service access point; in SGSN and GGSN, NSAPI identifies a PDP context that is associated with an MM context.

NSAPI information element is used for identifying the service access point of the 3rd layer data transmission of GPRS. The definition of NSAPI from the 3GPP 24.008 protocol is shown in Table 2. NSAPI is composed of two bytes, the first byte is NSAPI Information Element Identity (IEI), indicating that this field is the value of NSAPI; the lower four bits of the second byte is the value of NSAPI, and the higher four bits are 0. The detailed values of NSAPI are shown in Table 3.

**Table 2**

| 8 | 7 | 6 | 5 | 4 | 3 | 2 | 1 | |
|---|---|---|---|---|---|---|---|---|
| NSAPI IEI | | | | | | | | Byte 1 |
| 0 | 0 | 0 | 0 | NSAPI | | | | Byte 2 |

**Table 3**

| bit4 | bit3 | bit2 | bit 1 | |
|---|---|---|---|---|
| 0 | 0 | 0 | 0 | Reservation |
| 0 | 0 | 0 | 1 | Reservation |
| 0 | 0 | 1 | 0 | Reservation |
| 0 | 0 | 1 | 1 | Reservation |
| 0 | 1 | 0 | 0 | Reservation |
| 0 | 1 | 0 | 1 | NSAPI 5 |
| 0 | 1 | 1 | 0 | NSAPI 6 |
| 0 | 1 | 1 | 1 | NSAPI 7 |
| 1 | 0 | 0 | 0 | NSAPI 8 |
| 1 | 0 | 0 | 1 | NSAPI 9 |
| 1 | 0 | 1 | 0 | NSAPI 10 |
| 1 | 0 | 1 | 1 | NSAPI 11 |
| 1 | 1 | 0 | 0 | NSAPI 12 |
| 1 | 1 | 0 | 1 | NSAPI 13 |
| 1 | 1 | 1 | 0 | NSAPI 14 |
| 1 | 1 | 1 | 1 | NSAPI 15 |

As can be seen from the format of NSAPI, the values of NSAPI that can be selected by UE range from 5 to 15. The above definition of NSAPI is for Point to Point (PTP) transmission. In an MBMS service, the use of MBMS_NSAPI is the same as that of NSAPI and they share the value space. Sharing the value space means obtaining values from the same value space. In practical applications, however, MBMS_NSAPI and NSAPI can not take the same value simultaneously.

In addition, as shown in Table 4, the definition of TI in the 3GPP 24.008 protocol includes two bytes, wherein the second byte is an optional extended portion, and is not used if TI is not extended. The 5th bit to 8th bit of the first byte of TI is transaction identity TI, which is used for distinguishing the maximal 16 different bidirectional message flows of a given Protocol Discriminator (PD) and given SAP. Such a message flow is called a transaction. The transaction identity TI includes TI Obtain (TIO) and TI flag. Each TIO belongs to one transaction while, as one transaction can be initiated by either side of an interface, TI flag is used for identifying which side of the interface has initiated the transaction, and identifying who has assigned the TI. TI flag may be 0 or 1, when the transmitter of a message is the initiator of a transaction, TI flag of the message is 0, and otherwise it is 1. In other words, when TI flag is 0, the message is sent from the side that generated the TI, and when TI flag is 1, the message is sent to the side that generated the TI.

The extended portion of TI can be used to distinguish maximal 256 different bidirectional message flows for a given SAP and given PD, but the extension of TI is seldom used. EXT in Table 4 equals to a flag, and in the current extension of TI, the value of EXT is 1. In a coming extension, TI may be further extended by setting the value of EXT as 0. In other words, if the extension of TI is not used, TI has only one byte; if the extension of TI is used and the value of EXT is 1, TI has two bytes; and if the extension of TI is used and the value of EXT is 0, TI has more than two bytes.

**Table 4**

| 8 | 7 | 6 | 5 | 4 | 3 | 2 | 1 | |
|---|---|---|---|---|---|---|---|---|
| TI flag | TIO | | | - | - | - | - | Byte 1 |
| EXT | TIE | | | | | | | Byte 2 (optional) |

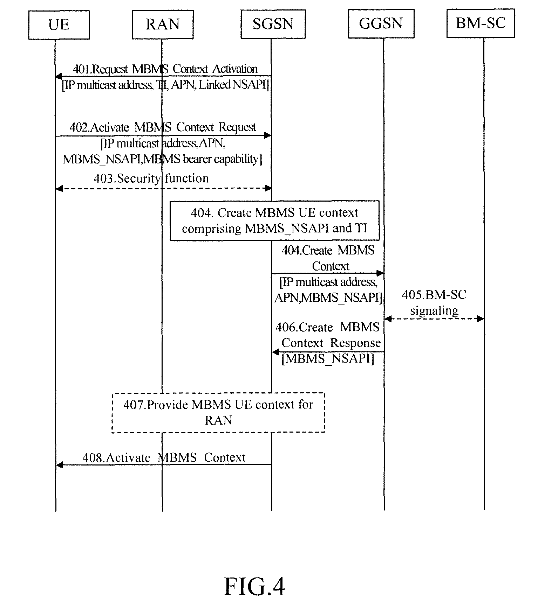

In an MBMS service, the above-mentioned NSAPI and TI are mainly used in the activating procedure and the deactivating procedure of an MBMS service. As shown in FIG 4, the activating procedure of an MBMS service in the prior art includes the following steps:
Step 401: SGSN sends UE a Request MBMS Context Activation message for requesting the UE to activate an MBMS UE context. This message carries at least the IP multicast address, APN, Linked NSAPI and TI, wherein the IP multicast address identifies the service that UE desires to activate; TI is selected by SGSN, and the value of TI is a value not used by other activated PDP contexts and MBMS UE context of this UE. The TI herein may be un-extended, or has been extended.
Step 402: after creating an MBMS UE context, the UE sends an Activate MBMS Context Request to SGSN, this request includes: IP multicast address, APN, MBMS_NSAPI, and MBMS bearer capability. The IP multicast address is used for identifying an MBMS multicast service for which the UE has initiated a joining/activating process; APN identifies a specific GGSN; MBMS bearer capability is used for identifying the maximal QoS the UE can process; MBMS_NSAPI is selected by the UE, the value of MBMS_NSAPI is a value not used by other activated PDP contexts and MBMS UE contexts of this UE. UE saves the selected MBMS_NSAPI and TI sent by SGSN to UE in Step 401 in the created MBMS UE context.
Step 403: SGSN performs a security function for the current UE, for example, performs authentication for UE, This step is omissible.
Step 404: SGSN creates an MBMS UE context, and this MBMS UE context includes TI of Step 401 and MBMS_NSAPI of Step 402; SGSN sends a Create MBMS Context Request to GGSN, and this request includes IP multicast address, APN, MBMS_NSAPI.
Step 405: GGSN performs signaling interaction with BM-SC, seeks the authorization for UE. If the UE has been authorized, this step is omissible.
Step 406: GGSN creates an MBMS UE context and sends a Create MBMS Context Response to SGSN. The MBMS UE context that GGSN has created includes MBMS_NSAPI.
Step 407: if at least one Packet Switched Radio Access Bearer (PS RAB) has been created for this UE, SGSN provides an MBMS UE context for the RAN; this MBMS UE context includes no MBMS_NSAPI.
Step 408: SGSN sends an Activate MBMS Context Accept to UE.

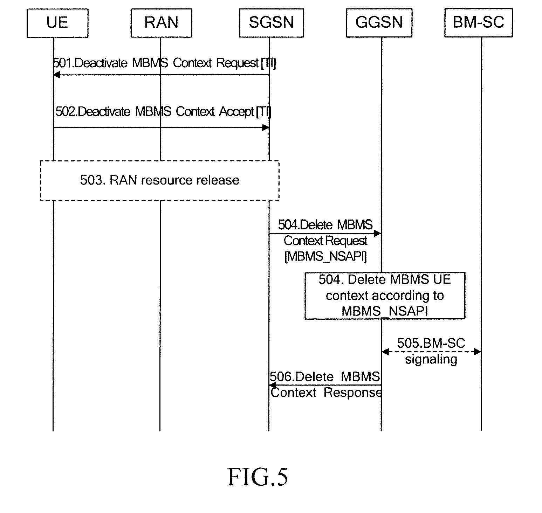

As shown in FIG 5, the deactivating procedure of MBMS service in the prior art includes the following steps:
Step 501: once SGSN has received a Deactivate MBMS UE Context Request, or for some reasons of SGSN itself, SGSN sends a Deactivate MBMS Context Request including TI to UE. The TI is used for identifying the MBMS UE context that needs to be deleted by UE, this TI is consistent with the TI of Step 401 in the activating process of an MBMS service, thus can be used to identify this MBMS UE context.
Step 502: UE deletes the MBMS UE context and sends a Deactivate MBMS Context Accept including TI to SGSN.
Step 503: if private radio resources have been currently allocated to transmit MBMS data for this UE, RAN releases the radio resources; if shared radio resources have been currently allocated to transmit MBMS data, RAN may decide to transfer the rest UE to private resources. Otherwise, this step is omissible.
Step 504: if SGSN has received a Deactivate MBMS Context Accept, or for some reasons of SGSN itself, SGSN sends a Delete MBMS Context Request including MBMS_NSAPI to the GGSN that has the MBMS UE context, wherein the MBMS_NSAPI is used for identifying this MBMS context.
Step 505: GGSN deletes the MBMS UE context according to the MBMS_NSAPI and sends an indicating message of deactivation to BM-SC to confirm that the deactivation of the MBMS UE context is successful, after receiving the deactivate indication, BM-SC deletes the MBMS UE context and sends a confirmation message to GGSN. The step of GGSN interacting with BM-SC is also omissible.
Step 506: GGSN sends a Delete MBMS Context Response to SGSN, to confirm that the MBMS UE context has been deactivated, after receiving the Delete MBMS Context Response, SGSN deletes its MBMS UE context.

It can be seen from the above processes, in the existing scheme that uses an MBMS_NSAPI to identify an MBMS UE context, the definition and the value space of MBMS_NSAPI are the same as those of the existing PTP scheme. This is apparent in the principle by which UE obtains an MBMS_NSAPI in Step 402 of the existing activating process of an MBMS service. Therefore, MBMS services that a user can activate simultaneously can not exceed the limit of the value space of MBMS_NSAPI, i.e. the maximal number of MBMS services that the user can activate simultaneously can not exceed eleven.

In an early-stage user service, when a user needs service transmission, for instance, making a phone call or getting online for network surfing, a corresponding PDP context would be activated for the service transmission. After the transmission, UE releases the corresponding bearer and NSAPI. Meanwhile due to the limit of UE capability, UE can not conduct too many service transmissions simultaneously, and the maximum number of service transmission is four. In such cases, the NSAPI of which the value space is eleven can fully meet the requirement of UE.

However, once an MBMS service is activated, users will not activate the service again for a long time, for example, the service of weather forecast, noon news, electronic journal, weekend goal collections, and etc. Once an MBMS service is activated, users will wait for receiving the corresponding service at the specific time. Therefore, users will activate many services for a long time, but most of these services do not start simultaneously, thus requiring no more capability of UE to receive these services simultaneously. Each time a user activates such a service, an MBMS UE context will be created, which will occupy one of the eleven values of MBMS_NSAPI. Thus, due to the limit of the MBMS_NSAPI value space, users can not activate more than eleven MBMS bearer services simultaneously. Users have to activate some activated services so as to subscribe to new services. This is similar to an early TV set that had only eight channels, which prevents the user from watching more TV programs that can be received by the user as there are dozens of, or even over a hundred TV programs being provided. Similar to a user of an early TV set with only eight channels, the user who has subscribed to multiple MBMS services but is provided with limited value space of MBMS_NASPI has to activate more services manually. However, manually activating an MBMS service is very inconvenient for a user, which makes the user less satisfied and more reluctant to select other services because of the complexity of subscription, thus reducing the profits of MBMS service providers and mobile network operators.

### Summary of the Invention

In view of the above, the main object of the present invention is to provide a method for creating a bearer in MBMS, which will enable a user to activate more than eleven MBMS bearer services simultaneously while avoiding the complexity of manual activation.

Another object of this invention is to provide a method for creating a bearer in MBMS, which not only enables a user to activate more than eleven MBMS bearer services simultaneously, but also identifies more bidirectional message flows simultaneously.

To achieve the above objects, this invention provides the following technical schemes.

A method for creating a bearer in MBMS, including at least the activating process and deactivating process of an MBMS service, wherein the activating process of an MBMS service includes the following steps:
an SGSN sends a Request MBMS Context Activation message that carries an IP multicast address, a APN, a Linked NSAPI, to a UE; upon receiving the request message, the UE creates an MBMS UE context, then returns an Activate MBMS Context Request that carried the IP multicast address, the APN, an extended MBMS_NSAPI, and an MBMS bearer capability to the SGSN;
the SGSN creates an MBMS UE context that comprises the extended MBMS_NSAPI, then sends a Create MBMS Context Request that carries the IP multicast address, the extended MBMS_NSAPI, and the APN to a GGSN; upon achieving an authorization for the current UE by a BM-SC, the GGSN creates an MBMS UE context, and returns a Create MBMS Context Response to the SGSN, and the SGSN allows the UE to activate an MBMS context;

When deactivating an MBMS service is needed, the process of deactivating an MBMS service includes the following steps:
the SGSN sends a Deactivate MBMS Context Request that carries the TI to the UE, after the UE deletes the MBMS UE context, the UE returns a Deactivate MBMS Context Accept message that carried the TI to the SGSN;
the SGSN sends a Delete MBMS Context Request that carries the extended MBMS_NSAPI to the GGSN which comprises the MBMS context to be deleted, the GGSN deletes the corresponding MBMS UE context according to the extended MBMS_NSAPI and returns a response to SGSN, and after receiving the response, the SGSN deletes the MBMS UE context.

The TI herein is the TI that includes an extended byte.

In the above scheme, extending the MBMS_NSAPI is more than four bits of the second byte of the existing MBMS_NSAPI information element are set as the value of MBMS_NSAPI. Preferably, extending the MBMS_NSAPI means that eight bits of the second byte of the existing MBMS_NSAPI information element are set as the value of MBMS_NSAPI. Or, extending the MBMS_NSAPI is extending bytes based on the existing MBMS_NSAPI information element and setting the extended byte as the value of MBMS_NSAPI. Preferably, extending the MBMS_NSAPI is extending one byte based on the existing MBMS_NSAPI information element and setting the lower seven bits of the extended byte as the value of MBMS_NSAPI. Or, extending MBMS_NSAPI is extending bytes based on the existing MBMS_NSAPI information element and setting the lower four bits of the second byte of MBMS_NSAPI information element as the value of MBMS_NSAPI.

A method for creating a bearer in MBMS, including at least the activating process and the deactivating process of an MBMS service, wherein the activating process of an MBMS service includes the following steps:
an SGSN sends a UE a Request MBMS Context Activation message that carries an IP multicast address, an APN, a Linked NSAPI; after receiving the request message, the UE creates an MBMS UE context, then returns an Activate MBMS Context Request that carries the IP multicast address, the APN, an extended MBMS_NSAPI, an MBMS bearer capability to the SGSN;
the SGSN creates an MBMS UE context that comprises the extended MBMS_NSAPI, then sends a Create MBMS Context Request that carries the IP multicast address, the extended MBMS_NSAPI, the APN to the GGSN; after achieving an authorization for the current UE by a BM-SC and creating an MBMS UE context, the GGSN returns a Create MBMS Context Response to the SGSN, the SGSN allows the UE to activate the MBMS context;

When deactivating an MBMS service is needed, the deactivating process of an MBMS service includes the following steps:
the SGSN sends a Deactivate MBMS Context Request that carries an MBMS context identity to the UE, after the UE deleted the MBMS UE context, the UE returns a Deactivate MBMS Context Accept message that comprises the MBMS context identity to SGSN;
the SGSN sends a Delete MBMS Context Request that carries the MBMS context identity to the GGSN that comprises the MBMS UE context to be deleted, the GGSN deletes the corresponding MBMS UE context according to the MBMS context identity and returns a response to the SGSN; after receiving the response, the SGSN deletes the MBMS UE context.

In this method, extending MBMS_NSAPI means more than four bits of the second byte of the existing MBMS_NSAPI information element are set as the value of MBMS_NSAPI. Preferably, extending MBMS_NSAPI means eight bits of the second byte of the existing MBMS_NSAPI information element are set as the value of MBMS_NSAPI. Or, extending MBMS_NSAPI is: extending bytes based on the existing MBMS_NSAPI information element and set the extended byte as the value of MBMS_NSAPI. Preferably, extending the MBMS_NSAPI is extending one byte based on the existing MBMS_NSAPI information element and setting the lower seven bits of extended byte as the value of MBMS_NSAPI. Or, extending the MBMS_NSAPI is extending bytes based on the existing MBMS_NSAPI information element and setting the lower four bits of the second byte of MBMS_NSAPI information element as the value of MBMS_NSAPI.

In the above scheme, the MBMS context identity is formed by combining the user identity, IP multicast address, and APN; or combining the user identity and IP multicast address; or combining the user identity and TMGI, wherein the user identity is IMSI.

In the above scheme, the extended MBMS_NSAPI and the NSAPI in the corresponding PDP context correspond to different IEI, respectively. In such a case, if more than four bits of the second byte of information element of the extended MBMS_NSAPI is set as the value ofMBMS_NSAPI, the second byte of the extended MBMS_NSAPI can adopt eight valid bits, the specific value of extended MBMS_NSAPI is the eight bits of the second byte when the value of the 8th bit of the second byte is 1, and bit8 of the second byte can be used to distinguish in the MBMS_NSAPI from the NSAPI in the PDP context.

The method for creating a bearer in MBMS provided by this invention has the following advantages and characteristics:
1) This invention enables users to activate more than eleven MBMS bearer services simultaneously through an extended MBMS_NSAPI, then users can conveniently activate more MBMS bearer services simultaneously such that users could be more satisfied with the use of MBMS services and the operating profits of MBMS service providers and mobile network operators could be increased.
2) This invention makes it possible to extend MBMS_NSAPI in different manners such that it is more flexible and more convenient to implement the extending.
3) This invention makes it possible to identify more than 16 bidirectional message flows by adopting an extended TI or replacing a TI with a special MBMS context identity, which is more flexible and convenient.
4) This invention has little impact on the procedures in the prior art because only minor modification of the existing procedures of UE activating and deactivating an MBMS service is needed, which is easy to implement.

### Brief Description of the Drawings

FIG 1 is a schematic diagram illustrating the principle of transmitting a multicast service;
FIG 2 is a schematic diagram illustrating the structure of a wireless network which supports broadcast / multicast services;
FIG 3 is a flowchart for processing an MBMS multicast service in the prior art;
FIG 4 is a flowchart for activating an MBMS service in the prior art;
FIG 5 is a flowchart for deactivating an MBMS service in the prior art;
FIG 6 is a flowchart for activating an MBMS service in accordance with this invention;
FIG 7 is a flowchart for deactivating an MBMS service in accordance with this invention;
FIG 8 is a flowchart for activating an MBMS service in accordance with this invention;
FIG 9 is a flowchart for deactivating an MBMS service in accordance with this invention.

### Embodiments of the Invention

The core idea of this invention is to extend the structure of MBMS_NSAPI such that users could activate more MBMS services simultaneously by using the extended MBMS_NSAPI.

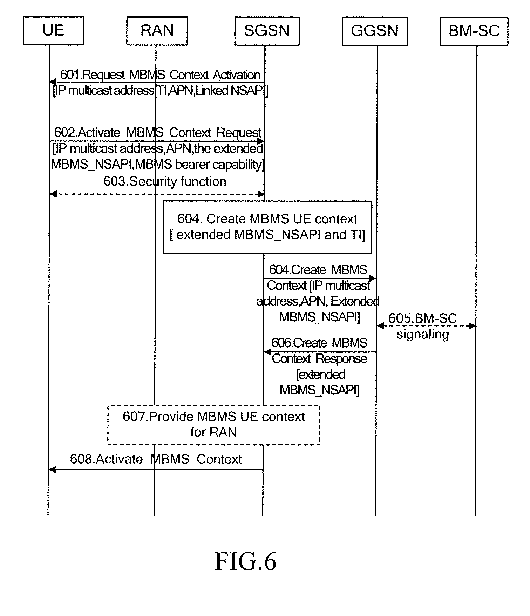

As shown in FIG 6, the activating procedure of an MBMS service in accordance with this invention includes the following steps:
Step 601: SGSN sends UE a Request MBMS Context Activation which at least includes IP multicast address, APN, Linked NSAPI and TI, and the request is used for requesting UE to activate an MBMS UE context. The IP multicast address identifies the service that UE desires to activate; TI is selected by SGSN, the value of TI is a value not used by other activated PDP contexts and MBMS UE contexts of this UE. The TI herein can be un-extended or extended.
Step 602: after creating an MBMS UE context, UE sends an Activate MBMS Context Request to SGSN, this request includes: IP multicast address, APN, extended MBMS_NSAPI, and MBMS bearer capability. The IP multicast address is used for identifying the MBMS multicast service for which UE has initiated a joining/activating process; APN identifies a specific GGSN; MBMS bearer capability is used for identifying the maximal QoS that UE can process; the extended MBMS_NSAPI is selected by UE, the value of MBMS_NSAPI is a value not ever used by other activated PDP contexts and MBMS UE contexts of this UE. UE saves the selected extended MBMS_NSAPI and TI sent by SGSN to UE in Step 601 in the created MBMS UE context.
Step 603: SGSN performs the security function for the current UE, for example: makes authentication for the UE. This step is omissible.
Step 604: SGSN creates an MBMS UE context, which includes the TI of Step 601 and the selected extended MBMS_NSAPI of Step 602; and SGSN sends a Create MBMS Context Request to GGSN, which includes IP multicast address, APN, and extended MBMS_NSAPI.
Step 605: GGSN performs signaling interaction with BM-SC, seeks authorization for UE. If this UE has been authorized, this step is omissible.
Step 606: GGSN creates an MBMS UE context and sends a Create MBMS Context Response to SGSN. The MBMS UE context that GGSN creates includes the extended MBMS_NSAPI.
Step 607: if at least a PS RAB has been created for this UE, SGSN provides an MBMS UE context for RAN; this MBMS UE context does not include the MBMS_NSAPI.
Step 608: SGSN sends an Activate MBMS Context Accept to UE.

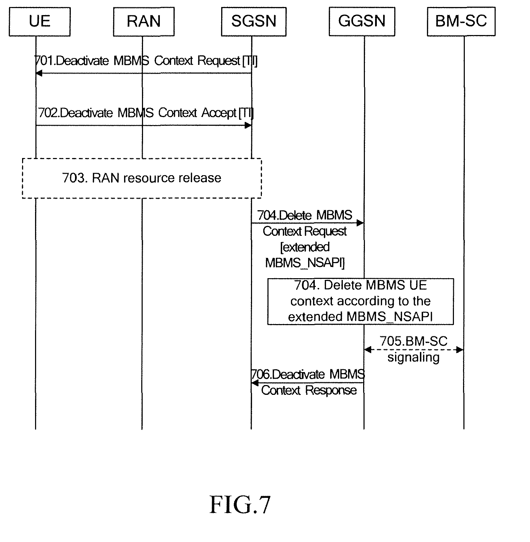

As shown in FIG 7, the existing deactivating process of an MBMS service includes the following steps:
Step 701: once SGSN has received a Deactivate MBMS UE Context Request or for some reason of SGSN itself, SGSN sends a Deactivate MBMS Context Request that includes TI to UE. The TI is used for identifying the MBMS UE context to be deleted by UE, this TI is the same as the TI of Step 601 in the activating process of an MBMS service, so it can identify this MBMS UE context.
Step 702: UE deletes the MBMS UE context and sends a Deactivate MBMS Context Accept that includes TI to SGSN. This TI is used for identifying the deleted MBMS UE context of UE.
Step 703: if private radio resources have currently been allocated to transmit MBMS data for this UE, RAN releases the radio resources; if shared radio resources have currently been allocated to transmit MBMS data, RAN may decide to transfer the remaining UEs to private resources. Otherwise, this step is omissible.
Step 704: if SGSN has received a Deactivate MBMS Context Accept or for some reason of SGSN itself, SGSN sends a Delete MBMS Context Request that includes extended MBMS_NSAPI to GGSN that includes the MBMS UE context, this extended MBMS_NSAPI is used for identifying the MBMS UE context to be deleted.
Step 705: GGSN deletes the corresponding MBMS UE context according to the extended MBMS_NSAPI and sends a deactivation indication to BM-SC and affirms the deactivation of MBMS UE context is successful; after receiving the deactivation indication, BM-SC deletes the MBMS UE context and sends a confirmation message to GGSN. The step of GGSN interacting with BM-SC is omissible.
Step 706: GGSN sends a Delete MBMS Context Response to SGSN, and affirms that the MBMS UE context has been deactivated, after SGSN receives the response, SGSN deletes its MBMS UE context.

In the above activating and deactivating processes of an MBMS service, two modes of extension can be used for extending MBMS_NSAPI:
As Table 5 and Table 6 show, the first mode is to set more than four bits of the second byte of MBMS_NSAPI as the value of MBMS_NSAPI, preferably, setting all the eight bits of the second byte of MBMS_NSAPI as the value of MBMS_NSAPI to enlarge the value space of MBMS_NSAPI. Table 5 is the structure of the extended MBMS_NSAPI, and Table 6 is the specific value of the extended MBMS_NSAPI, wherein the first value to the 7^{th} value are reserved while the others could be any selected value.

**Table 5**

| 8 | 7 | 6 | 5 | 4 | 3 | 2 | 1 | |
|---|---|---|---|---|---|---|---|---|
| MBMS_NSAPI IEI | | | | | | | | Byte 1 |
| MBMS_NSAPI value | | | | | | | | Byte 2 |

In Table 5, MBMS_NSAPI information element includes two bytes: the first byte is the MBMS_NSAPI Information element Identity (IEI), which is used for indicating this field is the value of MBMS_NSAPI; and the second byte is the value of MBMS_NSAPI.

**Table 6**

| bit8 | bit7 | bit6 | bit5 | bit4 | bit3 | bit2 | bit1 | |
|---|---|---|---|---|---|---|---|---|
| 0 | 0 | 0 | 0 | 0 | 0 | 0 | 0 | reserved |
| 0 | 0 | 0 | 0 | 0 | 0 | 0 | 1 | reserved |
| 0 | 0 | 0 | 0 | 0 | 0 | 1 | 0 | reserved |
| 0 | 0 | 0 | 0 | 0 | 0 | 1 | 1 | reserved |
| 0 | 0 | 0 | 0 | 0 | 1 | 0 | 0 | reserved |
| 0 | 0 | 0 | 0 | 0 | 1 | 0 | 1 | reserved |
| 0 | 0 | 0 | 0 | 0 | 1 | 1 | 0 | reserved |
| Other values | | | | | | | | optional |

As can be seen from Table 5 and Table 6, the coding space of MBMS_NSAPI includes eight bits, which can identify 256 MBMS bearer services that a user activates.

In the existing definition of NSAPI, the lower four bits of the second byte is set as the value space while in this mode of extension, more than four bits are set as the value space of MBMS_NSAPI, therefore, in this mode of extension, NSAPI does not share the same value space with MBMS_NSAPI.

The second mode is to extend one or more bytes based on the existing MBMS_NSAPI information element. As shown in Table 7, the MBMS_NSAPI information element includes three bytes, the definition of the first two bytes is unchanged, the first bit to the 7th bit of the third byte is the value of MBMS_NSAPI, and the 8th bit is the EXT flag which means that the extending mechanism is employed. At present, the value of EXT flag is 1. In future, the value of EXT flag can be set as 0 to further extend MBMS_NSAPI.

**Table 7**

| 8 | 7 | 6 | 5 | 4 | 3 | 2 | 1 | |
|---|---|---|---|---|---|---|---|---|
| MBMS_NSAPI IEI | | | | | | | | Byte 1 |
| 0 | 0 | 0 | 0 | MBMS_NSAPI | | | | Byte 2 |
| EXT | MBMS_NSAPI | | | | | | | Byte 3 |

Once the extending mechanism of MBMS_NSAPI is used, the value of MBMS_NSAPI in the second byte of MBMS_NSAPI information element is negligible, and the value of MBMS_NSAPI is the value from the first bit to the 7th bit of the third byte.

As can be seen from Table 7, the coding space of MBMS_NSAPI includes seven bits, the range of the value for MBMS services is up to 128, and MBMS_NSAPI can identify 128 MBMS bearer services activated by one user.

In the second mode, there are two schemes for indicating the value of MBMS_NSAPI:
1) Selecting the entire value space; namely, MBMS_NSAPI is selected in the mode without extension, wherein the value of MBMS_NSAPI is the first bit to the 4th bit of the second byte. Alternatively, MBMS_NSAPI can be selected in the extension mode, wherein the first bit to the 4th bit of the second byte is invalid for the value of MBMS_NSAPI, the 8th bit of the third byte is 1, and the first bit to the 7th bit of the third byte is set for the value of MBMS_NSAPI, wherein all the seven bits or any of the bits may be used. The NSAPI activated by a PDP context is just selected in the mode without extension while the NSAPI activated by an MBMS service is preferentially selected in the mode of extension. In this case, NSAPI share the value space with MBMS_NSAPI, the value space in the extended portion, however, is not allowed for NSAPI while both the value space of the extended portion and the portion without extension could be selected for the value of MBBMS_NASPI.
2) Just selecting the value space of the extended portion; namely, the first bit to the 4th bit of the second byte is invalid for the value of MBMS_NSAPI, the 8th bit of the third byte is 1, and the first bit to the 7th bit of the third byte is set for the value of MBMS_NSAPI, wherein all the seven bits or any of the bits may be used; The NSAPI activated by a PDP context is just selected in the mode without extension while the NSAPI activated by an MBMS service is just selected in the mode of extension. In this case, NSAPI does not share the value space with MBMS_NSAPI.

In order to make TI identify more bidirectional message flows, in the above scheme, TI can just adopt the extended mode, thus identifying 256 or more bidirectional message flows. To be specific, the first bit to the 7th bit of the second byte of TI in Table 4 are used as the value of TI, and the 5th bit to the 7th bit of the first byte are invalid. The value of TI is a value not used by other activated PDP contexts and MBMS UE contexts of this UE and is not the reserved value of the extended TI. According to the protocol (3GPP TS 24.008), the reserved value of the extended TI is 0000000 to 0000110.

In the case of adopting the extended TI, as shown in FIG 6, in Step 601 of the activating process of an MBMS service, TI that is carried by the Request MBMS Context Activation sent from SGSN to UE changes into the extended TI, and TI involved in the follow-up steps is the extended TI carried in Step 601. Likewise, for the deactivating process of MBMS service, the involved TI is the extended TI.

In this case, apart from the definition of TI, the activating and deactivating processes of an MBMS service are the same as Steps 601~607 and Steps 701~706, respectively.

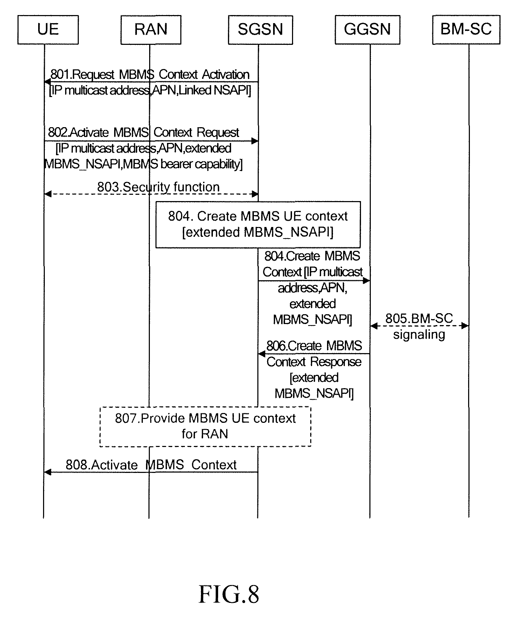

In order to identify more activated MBMS services and more bidirectional message flows, while adopting the extended MBMS_NSAPI, TI can be replaced by a specific MBMS context identity simultaneously. For an activating process of MBMS service, as shown in FIG 8, this idea just leads to the change in the first two steps:
Step 801: SGSN sends a Request MBMS Context Activation to UE, which is used for requesting UE to activate an MBMS UE context, this request at least contains IP multicast address, APN, and Linked NSAPI, wherein the IP multicast address identifies the service that UE desires to activate.
Step 802: upon creating an MBMS UE context, UE sends an Activate MBMS Context Request to SGSN, which includes: IP multicast address, APN, extended MBMS_NSAPI, and MBMS bearer capability. The IP multicast address is used for identifying the MBMS multicast service for which UE has initiated a joining/activating process; APN identifies a specific GGSN; MBMS bearer capability is used for identifying the maximal QoS that the UE can process; the extended MBMS_NSAPI is selected by UE, and the value of the MBMS_NSAPI is a value not used by other activated PDP contexts and MBMS UE contexts of this UE. Here, UE will save the selected extended MBMS_NSAPI in the created MBMS UE context, and will not save TI again.
Steps 803~808: the same as the process and description of Steps 603~608 in FIG 6.

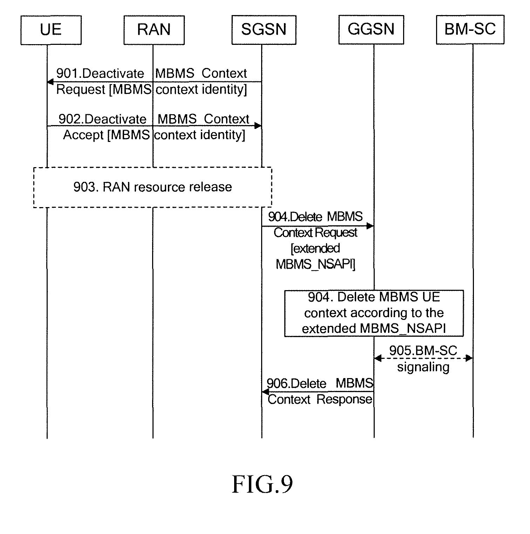

In accordance with the idea of using an extended MBMS_NSAPI and replacing TI, the deactivating process of an MBMS service has just changes in the first two steps as well, as shown in FIG 9:
Step 901: once SGSN has received a Deactivate MBMS UE Context Request or for some reason of SGSN itself, SGSN sends a Deactivate MBMS Context Request that includes an MBMS context identity to UE. This MBMS context identity is used for identifying the MBMS UE context to be deleted by UE.
Step 902: UE deletes the MBMS UE context and sends a Deactivate MBMS Context Accept message that contains the MBMS context identity to SGSN. This MBMS context identity is used for identifying the MBMS UE context deleted by UE.
Steps 903~906: the same as the process and description of Steps 703~706 in FIG. 7.

In this case, the MBMS UE context identity of Step 901 and Step 902 can be user identity+IP multicast address+APN, or user identity+IP multicast address, or user identity+TMGI, wherein the user identity can be IMSI. Then, the message that is sent in Step 901 and Step 902 at least carries the user identity and MBMS context identity, for example, it carries IMSI, IP multicast address, and APN; or it carries IMSI, and IP multicast address; or it carries IMSI and TMGI.

In the activating process and the deactivating process of MBMS service in Steps 801~808 and Steps 901~906, the extended MBMS_NSAPI can also be formed in two extension modes: one is to extend the value of MBMS_NSAPI from four bits to eight bits, as Table 5 shows; the other is to use the extension mechanism, i.e., extend a byte based on the existing MBMS_NSAPI information element, as Table 7 shows, the specific scheme for setting the value of MBMS_NSAPI is the same as the description above.

In the two extension modes of MBMS_NSAPI described above, and in the activating process and deactivating process of an MBMS service in which the extended MBMS_NSAPI is used as FIG 6 to FIG 9 show, MBMS_NSAPI and the NSAPI in the corresponding PDP context actually correspond to the same IEI, which has different names and uses different value spaces in different contexts.

In practical applications, MBMS_NSAPI can be distinguished from NSAPI through different values of IEI, in other words, the value of MBMS_NSAPI IEI is different from the value of NSAPI IEI, for example: set the value of NSAPI IEI as 28 and the value of MBMS_NSAPI IEI as 160. In this case, MBMS_NSAPI has nothing to do with NSAPI, and the value space thereof can be defined, used, and extend as needed. In this case, MBMS_NSAPI can also be extended in the two above-mentioned extension modes, and the extended MBMS_NSAPI can be applied to the activating process and deactivating process of an MBMS service as FIG 6 to FIG 9 show. To be specific, the extension mode adopted may be setting more than four bits of the second byte of MBMS_NSAPI as the value of MBMS_NSAPI, as Table 5 shows; or, as Table 7 shows, extending one or more bytes based on the existing MBMS_NSAPI and setting seven bits of the extended byte as the value of MBMS_NSAPI. When the first extension mode of MBMS_NSAPI is adopted, the preferred scheme for the value of the second byte of MBMS_NSAPI is as shown in Table 8:

**Table 8**

| bit8 | bit7 | bit6 | bit5 | bit4 | bit3 | bit2 | bit1 | |
|---|---|---|---|---|---|---|---|---|
| 0 | 0 | 0 | 0 | 0 | 0 | 0 | 0 | reserved |
| ..... | | | | | | | | |
| 0 | 1 | 1 | 1 | 1 | 1 | 1 | 1 | |
| 1 | 0 | 0 | 0 | 0 | 0 | 1 | 1 | 128 value for selection |
| ...... | | | | | | | | |
| 1 | 1 | 1 | 1 | 1 | 1 | 1 | 1 | |

It can be seen from the above that, when the value of bit8 is 0, all the corresponding values are reserved; when the value of bit8 is 1, all the corresponding values can be used, namely, setting eight bits as the value of MBMS_NSAPI when the value of bit8 is 1, and there are 128 values for selection.

In addition, in the creating process of a Point to Point (PTP) service, a radio access bearer needs to be set up, and the extended MBMS_NSAPI can be mapped into the RAB_ID parameter of RAN, wherein the extended MBMS_NSAPI is MBMS_NSAPI of which the IEI is different from that of NSAPI. In this case, as there are eight valid bits in the second byte of the extended MBMS_NSAPI, there are eight valid bits in the RAB_ID as well. Then RAN may distinguish a PDP service from an MBMS service through bit8, namely, distinguish an extended MBMS_NSAPI from a NSAPI of a PDP context based on bit8, for the default bit8 of NSAPI in a PDP context is 0 while the bit8 of an extended MBMS_NSAPI may be set as 1, as Table 8 shows.

The foregoing is only preferred embodiments of this invention and is not for use in limiting the protection scope thereof.

## Claims

1. A method for creating a bearer in Multimedia Broadcast/Multicast Service (MBMS), comprising at least an activating process and a deactivating process of an MBMS service, wherein the activating process of an MBMS service comprises:
sending a Request MBMS Context Activation message by a Serving GPRS Support Node (SGSN) to a User Equipment (UE), wherein the request message carries an IP multicast address, an Access Point Name (APN), a Linked Network Service Access Point Identity (NSAPI), and a Transaction Identity (TI); upon receiving the request message, the UE creating an MBMS UE context and returning an Activate MBMS Context Request message that carries the IP multicast address, the APN, an extended MBMS_NSAPI, and an MBMS bearer capability to the SGSN;
the SGSN creating an MBMS UE context that comprises the extended MBMS_NSAPI, and then sending a Create MBMS Context Request that carries the IP multicast address, the extended MBMS_NSAPI, and the APN to a Gateway GPRS Support Node (GGSN); upon achieving an authorization for the current UE by a BM-SC and creating an MBMS UE context, the GGSN returning a Create MBMS Context Response to the SGSN, and the SGSN allowing the UE to activate an MBMS context;
and when deactivating the MBMS service is needed, wherein the process of deactivating the MBMS service comprises:
the SGSN sending a Deactivate MBMS Context Request that carries the TI to the UE, upon deleting the MBMS UE context, the UE returning a Deactivate MBMS Context Accept message that carries the TI to the SGSN;
the SGSN sending a Delete MBMS Context Request that carries the extended MBMS_NSAPI to the GGSN which comprises the MBMS context to be deleted, the GGSN deleting the corresponding MBMS UE context according to the extended MBMS_NSAPI and returning a response to SGSN, upon receiving the response, the SGSN deleting the MBMS UE context.

2. The method according to Claim 1, wherein the TI is the TI that carries an extended byte.

3. The method according to Claim 1 or 2, wherein the extended MBMS_NSAPI is obtained by setting more than four bits of the second byte of the existing MBMS_NSAPI information element as the value of MBMS_NSAPI.

4. The method according to Claim 3, wherein the extended MBMS_NSAPI is obtained by setting eight bits of the second byte of the existing MBMS_NSAPI information element as the value of MBMS_NSAPI.

5. The method according to Claim 1, wherein the extended MBMS_NSAPI and the NSAPI of the corresponding PDP context correspond to different Information Element Identities (IEI), respectively.

6. The method according to Claim 5, wherein the extended MBMS_NSAPI is obtained by setting more than four bits of the second byte of the information element as the value of MBMS_NSAPI.

7. The method according to Claim 6, wherein there are eight valid bits in the second byte of the extended MBMS_NSAPI; when the 8th bit of the second byte of the information element is 1, the eight bits of the second byte are set as the value of MBMS_NSAPI, and the 8th bit of the second byte is used as the bit for distinguishing an extended MBMS_NSAPI from the NSAPI of a PDP context.

8. The method according to Claim 1, 2 or 5, wherein the extended MBMS_NSAPI is obtained by extending a byte based on the existing MBMS_NSAPI information element and setting the extended byte as the value of MBMS_NSAPI.

9. The method according to Claim 8, wherein the extended MBMS_NSAPI is obtained by extending one byte based on the existing MBMS_NSAPI information element and setting the lower seven bits of the extended byte as the value of MBMS_NSAPI.

10. The method according to Claim 1, 2 or 5, wherein the extended MBMS_NSAPI is obtained by extending a byte based on the existing MBMS_NSAPI information element and setting the lower four bits of the second byte of MBMS_NSAPI information element as the value of MBMS_NSAPI.

11. A method for creating a bearer in MBMS, comprising at least an activating process and a deactivating process of an MBMS service, wherein the activating process of MBMS service comprises:
sending a Request MBMS Context Activation message by an SGSN to a UE, wherein the request carries an IP multicast address, an APN, and a Linked NSAPI; upon receiving the request message, the UE creating an MBMS UE context, and then returning an Activate MBMS Context Request that carries the IP multicast address, the APN, an extended MBMS_NSAPI, and an MBMS bearer capability to the SGSN;
the SGSN creating an MBMS UE context that comprises the extended MBMS_NSAPI, and then sending a Create MBMS Context Request that carries the IP multicast address, the extended MBMS_NSAPI, and the APN to the GGSN; upon achieving an authorization for the current UE by a BM-SC and creating an MBMS UE context, the GGSN returning a Create MBMS Context Response to the SGSN, and the SGSN allowing the UE to activate the MBMS context;
and when deactivating the MBMS service is needed, the process of deactivating the MBMS service comprises:
the SGSN sending a Deactivate MBMS Context Request that carries an MBMS context identity to the UE, upon deleting the MBMS UE context, the UE returning a Deactivate MBMS Context Accept message that carries the MBMS context identity to the SGSN;
the SGSN sending a Delete MBMS Context Request that carries the MBMS context identity to the GGSN which comprises the MBMS UE context to be deleted, the GGSN deleting the corresponding MBMS UE context according to the MBMS context identity, and returning a response to the SGSN, upon receiving the response, the SGSN deleting the MBMS UE context.

12. The method according to Claim 11, wherein the extended MBMS_NSAPI is obtained by setting more than four bits of the second byte of the existing MBMS_NSAPI information element as the value of MBMS_NSAPI.

13. The method according to Claim 12, wherein the extended MBMS_NSAPI is obtained by setting eight bits of the second byte of the existing MBMS_NSAPI information element as the value of MBMS_NSAPI.

14. The method according to Claim 11, wherein the extended MBMS_NSAPI is obtained by extending a byte based on the existing MBMS_NSAPI information element and setting the extended byte as the value of MBMS_NSAPI.

15. The method according to Claim 14, wherein the extended MBMS_NSAPI is obtained by extending one byte based on the existing MBMS_NSAPI information element and setting the lower seven bits of the extended byte as the value of MBMS_NSAPI.

16. The method according to Claim 11, wherein the extended MBMS_NSAPI is obtained by extending a byte based on the existing MBMS_NSAPI information element and setting the lower four bits of the second byte of the MBMS_NSAPI information element as the value of MBMS_NSAPI.

17. The method according to Claim 11, 12 or 16, wherein the extended MBMS_NSAPI and the NSAPI of the corresponding PDP context correspond to different IEI, respectively.

18. The method according to Claim 17, wherein the extended MBMS_NSAPI has eight valid bits in the second byte; when the 8th bit of the second byte of the information element is 1, the eight bits of the second byte of the information element are set as the value of MBMS_NSAPI, and the 8th bit of the second byte is used as the bit for distinguishing an extended MBMS_NSAPI from the NSAPI of an PDP context.

19. The method according to Claim 14 or 15, wherein the extended MBMS_NSAPI and the NSAPI of the corresponding PDP context correspond to different IEI, respectively.

20. The method according to any of Claims 11-16, wherein the MBMS context identity is formed by combining the user identity, IP multicast address, and APN; or combining the user identity and IP multicast address; or combining the user identity and Temporary Mobile Group Identity (TMGI).

21. The method according to Claim 20, wherein the user identity is IP Multimedia Sub-system Identifier (IMSI).
